(19) Europäisches Patentamt
European Patent Office
Office européen des brevets

(11) EP 2 263 699 B1

(12) # EUROPEAN PATENT SPECIFICATION

(45) Date of publication and mention of the grant of the patent:
**12.03.2014 Bulletin 2014/11**

(21) Application number: **08721867.3**

(22) Date of filing: **12.03.2008**

(51) Int Cl.:
***A01N 25/32*** *(2006.01)* ***A01N 47/44*** *(2006.01)*
***A01N 33/12*** *(2006.01)* ***A01N 43/16*** *(2006.01)*
***A61K 47/26*** *(2006.01)*

(86) International application number:
**PCT/JP2008/054451**

(87) International publication number:
**WO 2009/113161 (17.09.2009 Gazette 2009/38)**

(54) **SOLUTION COMPOSITION FOR CONTACT LENSES**

LÖSUNGSZUSAMMENSETZUNG FÜR KONTAKTLINSEN

COMPOSITION DE SOLUTION POUR DES LENTILLES DE CONTACT

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**22.12.2010 Bulletin 2010/51**

(73) Proprietor: **Menicon Co., Ltd.**
**Nagoya-shi, Aichi 460-0006 (JP)**

(72) Inventors:
- **MORI, Osamu**
**Kasugai-shi**
**Aichi 487-0032 (JP)**
- **KOJIMA, Yukihiro**
**Kasugai-shi**
**Aichi 487-0032 (JP)**

(74) Representative: **Paget, Hugh Charles Edward**
**Mewburn Ellis LLP**
**33 Gutter Lane**
**London**
**EC2V 8AS (GB)**

(56) References cited:
**EP-A1- 0 690 131**
**JP-A- 4 161 920**
**JP-A- 8 152 585**
**JP-A- 8 152 585**
**JP-A- 9 278 610**
**JP-A- 2002 363 598**
**JP-A- 2005 309 420**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 263 699 B1

## Description

### TECHNICAL FIELD

The present invention relates to a liquid composition for a contact lens, and particularly to a liquid composition for a contact lens which can advantageously improve wearing properties of the contact lens.

### BACKGROUND ART

As solutions or liquids for contact lenses, various solutions such as disinfecting solution, cleaning solution, storage solution and rinsing solution are conventionally used. Further, in recent years, multi-purpose solution (MPS), which can perform, for example, disinfection, cleaning, storage, and rinsing, by using such a single solution, has been widely used.

Of these solutions for contact lenses, the disinfecting solutions and the multi-purpose solutions contain various disinfectants. As such disinfectants, organic nitrogen-based disinfectants such as polyhexamethylene biguanide (PHMB), polyquaternium and benzalkonium chloride have been recently often used, because an effect can be obtained by blending a relatively small amount thereof, and a contact lens treated with a contact lens solution containing such a disinfectant can be worn on the eye without a need of rinsing of the lens with another solution.

However, the contact lens treated with the contact lens solution containing the organic nitrogen-based disinfectant has a problem of poor wearing feeling. That is to say, when the contact lens is treated with the contact lens solution containing the organic nitrogen-based disinfectant, the organic nitrogen-based disinfectant is impregnated in or adsorbed by the lens to remain in the lens even after the treatment, and the organic nitrogen-based disinfectant remaining in the lens is released on a surface of the eye at the time of wearing. The organic nitrogen-based disinfectant has toxicity (irritant properties) to the ocular tissue, so that the wearing feeling of the contact lens becomes less comfortable.

To such a problem, JP-T-2004-512904 (patent document 1) discloses a contact lens solution containing a predetermined amount of a preservative (disinfectant) enhancer such as inositol and a predetermined amount of an organic nitrogen-based disinfectant. It is said that the contact lens treated with such a contact lens solution has an improved wearing feeling (comfortableness), because the organic nitrogen-based disinfectant is inhibited from being adsorbed to the contact lens by the inositol or the like. In such a conventional contact lens solution, adsorption of the organic nitrogen-based disinfectant to the lens is inhibited by a compound such as inositol, and the amount of the organic nitrogen-based disinfectant released on the eyeball at the time of wearing the lens is decreased. However, there has been still a problem that the organic nitrogen-based disinfectant remaining in the inside of the contact lens after the treatment with the contact lens solution is released on the eyeball at the time of wearing the contact lens, thereby deteriorating the wearing feeling.

Further, as cleaning agents to be contained in the contact lens solutions such as the cleaning solutions and multi-purpose solutions, surfactants have conventionally been generally used (for example, see JP-A-2000-347146 (patent document 2)). When the surfactants are increased in concentration in order to increase cleaning property, toxicity to the ocular tissue also increases therewith. They are therefore generally used at such a low concentration that safety to the eye can be assured. However, the contact lens solution containing the surfactant at such a low concentration has weak cleaning property, so that stains such as protein and lipid adhered onto the lens cannot be sufficiently removed. The stains adhered onto the lens deteriorate wettability or oxygen permeability, thereby deteriorating the wearing feeling of the contact lens.

Furthermore, with recent popularization of contact lenses, the number of contact lens wearers who complain uncomfortable feelings such as a dry feeling has increased. To solve this problem, a polymer compound such as polyvinyl alcohol or methylcellulose is often contained in contact lens solutions in an effort to improve the wearing feeling of the contact lenses by enhancing moisture retention of the contact lenses to alleviate the dry feeling and the like at the time of wearing (for example, see JP-A-2005-281319 (patent document 3)). However, even when the contact lens is treated with the contact lens solution containing such a polymer compound, the polymer compound scarcely enters the inside of a network structure of the contact lens, because of its giant molecule, and only a small amount thereof is adsorbed by a surface of the contact lens. Accordingly, the polymer compound on the lens is allowed to rapidly flow away by the tear fluid at the time of wearing the lens, so that such a contact lens solution has not been able to effectively improve the wearing feeling.

JP-A-8-152585 (patent document 4) discloses a contact lens solution containing trehalose, which is a low-molecular compound, instead of the above-described polymer compound, as a contact lens solution providing little uncomfortable feelings such as a dry feeling and a foreign body sensation and providing a good wearing feeling. However, the trehalose is a disaccharide and has a small molecule, so that although it can be rapidly entrapped into the inside of the network structure of the contact lens, the trehalose is rapidly released and allowed to flow away at the time of wearing

the lens. In addition, there are problems of insufficient water retentivity and easy crystallization caused by drying. Accordingly, such a contact lens solution has not been able to advantageously enjoy the improved wearing feeling obtained by using trehalose.

[Patent Document 1] JP-T-2004-512904
[Patent Document 2] JP-A-2000-347146
[Patent Document 3] JP-A-2005-281319
[Patent Document 4] JP-A-8-152585

DISCLOSURE OF THE INVENTION

PROBLEMS TO BE SOLVED BY THE INVENTION

The present invention has been made in the light of the situations described above. It is therefore an object of the present invention to provide a liquid composition for a contact lens, which comprehensively resolves various factors deteriorating wearing properties of the contact lens and can advantageously improve wearing properties of the contact lens.

MEANS FOR SOLVING THE PROBLEMS

In order to solve the above-described problems, the present inventors have made extensive studies, and as a result, it has been found that a glycosyl trehalose is advantageous for solving the above-described problems, thus leading to completion of the present invention.

The present invention can be advantageously carried out in various embodiments as described below in order to solve the above-described problem and a problem grasped from the whole description of the specification and the drawing. The respective embodiments can also be employed in any combination. It is to be understood that the embodiments and technical features of the present invention can be recognized based on an inventive concept disclosed in the whole description of the specification and the drawing without being limited to the details of the following description.

(1) A first aspect of the present invention provides a liquid composition for a contact lens including a glycosyl trehalose in a liquid medium according to claim 1.

(2) The liquid composition for a contact lens described in the above (1), further including an organic nitrogen-based disinfectant.

(3) The liquid composition for a contact lens described in the above (2), wherein the organic nitrogen-based disinfectant includes at least one component selected from the group consisting of a quaternary ammonium compound, a polymer of the quaternary ammonium compound, a biguanide compound, and a polymer of the biguanide compound.

(4) The liquid composition for a contact lens described in the above (2) or (3), wherein the organic nitrogen-based disinfectant is contained at a concentration of 0.00001 to 0.1 w/v%.

(5) The liquid composition for a contact lens described in any one of the above (1) to (4), further including a surfactant.

(6) The liquid composition for a contact lens described in the above (5), wherein the surfactant includes at least one component selected from the group consisting of a nonionic surfactant and a cationic surfactant.

(7) The liquid composition for a contact lens described in the above (5) or (6), wherein the surfactant is contained at a concentration of 0.001 to 10 w/v%.

(8) The liquid composition for a contact lens described in any one of the above (1) to (7), further including a polyhydric alcohol.

(9) The liquid composition for a contact lens described in the above (8), wherein the polyhydric alcohol is at least one of glycerol and propylene glycol.

(10) The liquid composition for a contact lens described in the above (8) or (9), wherein the polyhydric alcohol is

contained at a concentration of 0.01 to 5 w/v%.

(11) The liquid composition for a contact lens described in any one of the above (1) to (10), further including amino acids.

(12) The liquid composition for a contact lens described in the above (11), wherein the amino acids is contained at a concentration of 0.01 to 5 w/v%.

(13) A second aspect of the present invention provides the use of the liquid composition for a contact lens described in any one of the above (1) to (12) as one of a disinfecting solution, cleaning solution, storage solution and rinsing solution for a contact lens.

ADVANTAGEOUS EFFECT OF THE INVENTION

As described above, in the liquid composition for a contact lens according to the present invention, the glycosyl trehalose is contained in the liquid medium. Accordingly, the contact lens treated with such a liquid composition for a contact lens can be advantageously improved in moisture retention thereof by effective water retentivity of the glycosyl trehalose. In the contact lens improved in moisture retention, uncomfortable feelings such as a dry feeling and a foreign body sensation at the time of wearing it can be advantageously resolved or relieved. Thus, a wearing feeling or wearing properties of the contact lens can be advantageously improved.

Moreover, the glycosyl trehalose used in the present invention has a small molecular size compared to a polymer compound, and has a large molecular size compared to an oligosaccharide composed of two monosaccharides, such as trehalose. Accordingly, there can be exhibited a characteristic that the glycosyl trehalose is gradually entrapped into the inside of the network structure of the contact lens at the time of treating the contact lens with the liquid composition containing the glycosyl trehalose, whereas the glycosyl trehalose is gradually released at the time of wearing the contact lens thus treated. Thus, an effect of improvement of the wearing feeling, due to resolution of the drying feeling and the like by the glycosyl trehalose, can be advantageously continuously exhibited over a long period of time. In addition, the glycosyl trehalose is almost free from crystal deposition, so that a problem of deposition of components having low solubility on a lens surface, in contact lens care goods, can also be advantageously inhibited by the presence of the glycosyl trehalose.

Further, in the liquid composition for a contact lens according to the present invention, an organic nitrogen-based disinfectant may be further contained in the liquid medium together with the glycosyl trehalose. In the liquid composition for a contact lens containing the organic nitrogen-based disinfectant according to the present invention, due to the glycosyl trehalose, there can be exhibited a characteristic that adsorption of the organic nitrogen-based disinfectant to the lens is advantageously inhibited, and at the same time, toxicity of the organic nitrogen-based disinfectant is advantageously reduced or relieved, which makes it possible to advantageously inhibit or avoid deterioration of the wearing feeling of the contact lens caused by the organic nitrogen-based disinfectant.

Furthermore, in the liquid composition for a contact lens according to the present invention, the surfactant may be further contained together with the organic nitrogen-based disinfectant. In the liquid composition for a contact lens containing the surfactant according to the present invention, cleaning property of the surfactant can be advantageously improved by the presence of the glycosyl trehalose, so that stains on the contact lens can be extremely advantageously removed, which makes it possible to advantageously inhibit or avoid deterioration of the wearing feeling caused by the stains on the contact lens.

In addition, the liquid composition for a contact lens according to the present invention can be advantageously used as a multi-purpose solution by further containing the organic nitrogen-based disinfectant, the surfactant, and the like in the liquid medium, together with the glycosyl trehalose. When the liquid composition for a contact lens according to the present invention is used as the multi-purpose solution, various effects as described above can be concurrently enjoyed. Accordingly, the above-described various factors which deteriorate the wearing feeling or wearing properties of the contact lens are comprehensively removed, thereby extremely advantageously improving the wearing feeling of the contact lens.

BEST MODE FOR CARRYING OUT THE INVENTION

In a liquid or solution composition for a contact lens according to the present invention, a glycosyl trehalose is contained in a predetermined liquid medium. As the liquid medium used therein, any solution mainly composed of water may be used, as well as water itself such as city water, purified water or distilled water, as long as it has high safety to living organisms and is ophthalmologically sufficiently acceptable.

The glycosyl trehalose to be contained in the liquid medium is an oligosaccharide that is composed of three or

more monosaccharides in which a glucose unit having a polymerization degree of 1 to 10 is bonded to trehalose that is composed of two monosaccharides, i.e., disaccharide. Examples of the oligosaccharide composed of three or more monosaccharides include glucosyl trehalose, maltosyl trehalose, maltotriosyl trehalose, maltotetraosyl trehalose, maltopentaosyl trehalose, and maltohexaosyl trehalose. Preferably, the present invention employs glycosyl trehaloses that are composed of three to five monosaccharides. Examples thereof include glucosyl trehalose in which a glucosyl group (polymerization degree: 1) is bonded to trehalose, maltosyl trehalose in which a maltosyl group (polymerization degree: 2) is bonded to trehalose, and maltotriosyl trehalose in which a maltotriosyl group (polymerization degree: 3) is bonded to trehalose. More preferably, maltosyl trehalose that is composed of four monosaccharides is employed. Such a glycosyl trehalose is classified into an α-type and a β-type depending on the binding mode. In the present invention, an α-glycosyl trehalose, which is α-type is more preferably used, because the object of the present invention can be more advantageously achieved. Then, any one of, or any suitable combination of glycosyl trehaloses is contained in the above-described liquid medium, thereby constituting the liquid composition for a contact lens according to the present invention.

As described above, in the liquid composition for a contact lens according to the present invention, the above-described glycosyl trehalose is contained in the predetermined liquid medium, so that the wearing feeling or wearing properties of the contact lens treated with such a liquid composition for a contact lens can be advantageously improved. Specifically, when the contact lens is treated with the liquid composition for a contact lens according to the present invention, the glycosyl trehalose in the liquid composition for a contact lens is adsorbed by the surface of the contact lens and impregnated in or adsorbed by the inside of the contact lens at the same time. Then, moisture retention of the contact lens can be advantageously improved by the glycosyl trehalose which is present in the inside or surface of the contact lens, so that, the uncomfortable feelings such as the dry feeling and the foreign body sensation at the time of wearing it are advantageously resolved or relieved in the contact lens treated with the liquid composition for a contact lens according to the present invention. Thus, the wearing feeling or wearing properties of the contact lens can be advantageously improved.

Moreover, the glycosyl trehalose is an oligosaccharide that is composed of three or more monosaccharides, and has a large molecular size compared to trehalose that is composed of two monosaccharides, and has an extremely small molecular size compared to a polymer compound such as polyvinyl alcohol. As a result, the glycosyl trehalose can be gradually entrapped into the inside of the network structure of the contact lens, and can be gradually released at the time of wearing the contact lens. Accordingly, in the contact lens treated with the liquid composition for a contact lens according to the present invention, the glycosyl trehalose which improves moisture retention of the contact lens is gradually released over a long period of time at the time of wearing it, so that the above-described moisture retention effect can be advantageously exhibited over a long period of time. Thus, the excellent wearing feeling or wearing properties can be advantageously continuously enjoyed.

The concentration of the glycosyl trehalose contained in the liquid medium is of 0.01 to 5 w/w%, and preferably of 0.2 to 0.8 w/w%. When the concentration of the glycosyl trehalose contained in the liquid composition for a contact lens is too high, the viscosity of the resulting liquid composition for a contact lens increases to deteriorate handling properties, and the osmotic pressure of such a liquid composition become high to increase irritation to the eye, which undesirably may cause problems of changes in size of the contact lens treated therewith, deterioration of compatibility caused by the change in size, and the like. On the other hand, when the concentration of the glycosyl trehalose contained is too low, there is the possibility of failing to sufficiently exhibit the moisture retention effect of the contact lens as described above, the effect of inhibiting adsorption and effect of reducing toxicity of the organic nitrogen-based disinfectant, and the cleaning property enhancing effect of the surfactant which will be described later. This is therefore undesirable.

Further, the glycosyl trehalose which can be used in the present invention is not particularly limited in its origin and properties, and any glycosyl trehalose obtained by known production methods can be appropriately employed. Particularly, the present invention advantageously employs one obtained by enzymatic transfer of a reducing end of a reducing starch hydrolyzate such as maltotriose and maltotetraose, which has a glucose polymerization degree of 3 or more, to an α-1,1 bond (trehalose form), which is a nonreducing end, because it is inexpensive and available in large amounts.

In addition, in the liquid composition for a contact lens according to the present invention, various starch hydrolyzates and derivatives thereof may be further contained, in addition to the above-described glycosyl trehalose. The starch hydrolyzates specifically include glucose, maltose, maltotriose, maltotetraose and the like. Further, the derivatives of the starch hydrolyzates include trehalose that is produced by enzymatic transfer of maltose (glucose polymerization degree: 2), sugar alcohols such as sorbitol, maltitol, maltotriitol, martotetraitol and maltopentaitol which are reduced products of the starch hydrolysates, and the like. These starch hydrolysates and derivatives thereof are by-products that are formed at the time of producing the glycosyl trehalose by the above-described enzymatic transfer of the starch hydrolyzate, and when the glycosyl trehalose which is not separated from such by-products is used, the desired liquid composition for a contact lens is advantageously obtained at low cost.

The concentration of the above-described starch hydrolyzate and derivative thereof, excluding the glycosyl

trehalose, contained in the liquid composition for a contact lens is generally about 1.0 w/w% or less, and preferably about 0.5 w/w% or less. When the concentration of the above-described starch hydrolyzate and derivative thereof other than the glycosyl trehalose is too high, those compounds are also entrapped into the inside of the network structure of the contact lens together with the glycosyl trehalose, at the time of treating the contact lens with the liquid composition for a contact lens. Accordingly, the amount of the glycosyl trehalose which can be entrapped into the contact lens relatively decreases, which may undesirably inhibit the sufficient exhibitions of the moisture retention effect of the contact lens as described above, the adsorption inhibiting effect and toxicity reducing effect of the organic nitrogen-based disinfectant and the cleaning property enhancing effect of the cleaning agent, which will be described later.

Then, a disinfectant, a cleaning agent and the like may be further appropriately contained in the liquid composition for a contact lens containing the glycosyl trehalose according to the present invention, depending on its purpose, to advantageously prepare a disinfecting solution, a cleaning solution, a storage solution, and a rinsing solution for a contact lens, for example.

For example, in the liquid composition for a contact lens according to the present invention, a disinfectant is further advantageously contained in the above-described liquid medium in order to prevent the growth of bacteria, fungi and the like on the contact lens.

In the present invention, the disinfectant is not particularly limited. Any known ophthalmologic disinfectant which is ophthalmologically acceptable can be appropriately used. Of these, organic nitrogen-based disinfectants which are conventionally used as disinfectants for multi-purpose solutions are preferably used in the present invention. In particular, it is more preferable to use an organic nitrogen-based disinfectant including at least one component selected from the group consisting of a biguanide compound, a polymer of the biguanide compound, a quaternary ammonium compound, and a polymer of the quaternary ammonium compound.

Examples of the above-described biguanide compounds and polymers thereof include, polyhexamethylene biguanide (PHMB), and chlorhexidine, and further, a biguanide compound and a polymer thereof represented by the following structural formula (I). In particular, in the present invention, PHMB is preferably used because it is hardly adsorbed to the contact lens.

(Chemical Formula 1)

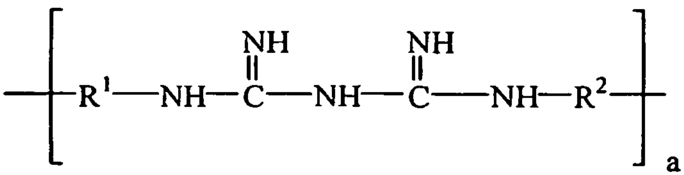

··· (I)

wherein a is an integer of 1 or more, and $R^1$ and $R^2$ each independently is a divalent group represented by CnHmOp (in which n=1 to 24, m=2 to 48 and p=0 to 11).

Examples of the quaternary ammonium compounds and the polymers thereof include quaternary ammonium polymers represented by the following structural formulas (II) to (IV); condensation products of diamines and dihalogen compounds, as disclosed in the Japanese Patent No. 2550036; polycationic compounds as disclosed in JP-A-4-231054, JP-A-8-512145, JP-A-11-249087, for example; cationic cellulose polymers such as polyquaternium-4 and polyquaternium-10; benzalkonium halide; as well as alkyl ammonium salts such as tetraalkyl ammonium salts such as alkyltrimethylammonium chlorides and trialkylbenzyl ammonium salts such as octadecyldimethylbenzylammonium chloride; alkylhydroxyalkylimidazoline quaternary salts represented by hydroxyethylalkylimidazoline chloride; alkylisoquinolinium salts represented by alkylisoquinolinium bromide; and cationic surfactants such as amidoamines.

(Chemical Formula 2))

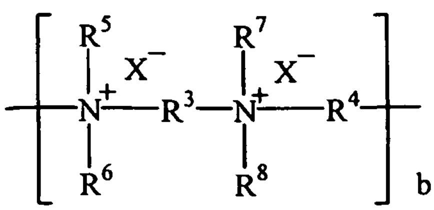

···(II)

wherein b is an integer of 1 or more, $X^-$ is a monovalent anion such as $Cl^-$, $R^3$ and $R^4$ each independently is a divalent group represented by CnHmOp (in which n=1 to 24, m=2 to 48 and p=0 to 11), and $R^5$, $R^6$, $R^7$ and $R^8$ each independently

is a monovalent group represented by CqHrOs (in which q=1 to 4, r=2 to 9 and s=0 to 1).

(Chemical Formula 3)

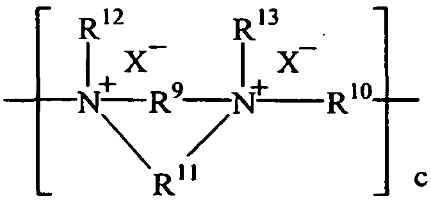

··· (III)

wherein c is an integer of 1 or more, $X^-$ is a monovalent anion such as $Cl^-$, $R^9$ and $R^{10}$ each independently is a divalent group represented by CnHmOp (in which n=1 to 24, m=2 to 48 and p=0 to 11), $R^{11}$ is a divalent group represented by CtHuOv (in which t=1 to 4, u=2 to 9 and v=0 to 1), and $R^{12}$ and $R^{13}$ each independently is a monovalent group represented by CqHrOs (in which q=1 to 4, r=2 to 9 and s=0 to 1).

(Chemical Formula 4)

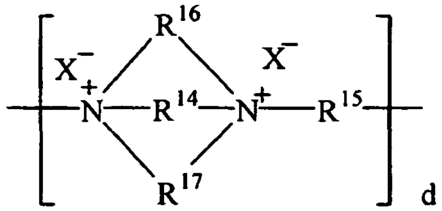

···(IV)

wherein d is an integer of 1 or more, $X^-$ is a monovalent anion such as $Cl^-$, $R^{14}$ and $R^{15}$ each independently is a divalent group represented by CnHmOp (in which n=1 to 24, m=2 to 48 and p=0 to 11), and $R^{16}$ and $R^{17}$ each independently is a divalent group represented by CtHuOv (in which t=1 to 4, u=2 to 9 and v=0 to 1).

The concentration of the organic nitrogen-based disinfectant contained in the liquid medium is not particularly limited. The concentration may be appropriately determined depending on the kind of organic nitrogen-based disinfectant or the like. Generally, it is used at a concentration of about 0.00001 to about 0.1 w/v%, and preferably at a concentration of about 0.00005 to about 0.001 w/v%. When the concentration of the organic nitrogen-based disinfectant contained is too high, toxicity excessively increases, which may cause a safety problem. On the other hand, when the concentration of the organic nitrogen-based disinfectant contained is too low, the sufficient disinfection effect may not be obtained.

In the liquid composition for a contact lens containing such an organic nitrogen-based disinfectant, the glycosyl trehalose is contained together with the organic nitrogen-based disinfectant, so that the wearing feeling of the contact lens treated with such a liquid composition for a contact lens can be advantageously improved. Specifically, when the contact lens is treated with the liquid composition for a contact lens containing such an organic nitrogen-based disinfectant, the organic nitrogen-based disinfectant contained in the liquid composition for a contact lens is impregnated in or adsorbed by the contact lens. In the liquid composition for a contact lens according to the present invention, adsorption of the organic nitrogen-based disinfectant to the contact lens can be advantageously inhibited by the glycosyl trehalose contained in the liquid medium together with the organic nitrogen-based disinfectant, and at the same time, toxicity of the organic nitrogen-based disinfectant can be advantageously reduced or relieved. Accordingly, in the contact lens treated with the liquid composition for a contact lens according to the present invention, the amount of the organic nitrogen-based disinfectant released on the eyeball and its toxicity can be advantageously reduced at the time of wearing the contact lens, thereby advantageously inhibiting or avoiding deterioration of the wearing feeling of the contact lens due to the toxicity of such a organic nitrogen-based disinfectant. Thus, the excellent wearing feeling of the contact lens can be advantageously enjoyed.

Further, in the liquid composition for a contact lens according to the present invention, in order to remove protein stains or lipid stains adhered onto the contact lens at the time of wearing, a cleaning agent may be further contained in the above-described liquid medium.

The cleaning agent used therein is not particularly limited in the present invention. Any known cleaning agent which is ophthalmologically acceptable can be appropriately used depending on the purpose. In general, surfactants are advantageously used, and particularly, of such surfactants, one including at least one component selected from the group consisting of a nonionic surfactant and a cationic surfactant is preferably used in the present invention.

Here, any conventionally known nonionic surfactant can be employed, as long as it has high safety to living

organisms and has no influence to contact lens raw materials. Examples thereof include polyglycerin fatty acid esters, polyoxyethylene alkyl ethers, polyoxyethylene alkyl ether phosphoric acids, polyoxyethylene alkyl amines, polyoxyethylene alkyl amides, polyoxyethylene alkyl phenyl ethers, polyoxyethylene alkyl phenyl ether-formaldehyde condensation products, polyoxyethylene-polyoxypropylene alkyl ethers, polyoxyethylene-polyoxypropylene block copolymers, polyoxyethylene-polyoxypropylene ethylenediamines, polyoxyethylene castor oil, polyoxyethylene hydrogenated castor oil, polyoxyethylene fatty acid esters, polyoxyethylene glycerin fatty acid esters, polyoxyethylene sorbitol fatty acid esters, polyoxyethylene sorbitan fatty acid esters, polyoxyethylene sterols, polyoxyethylene hydrogenated sterols, and polyoxyethylene lanoline alcohols. Of these, it is particularly preferable to use Pluronic, Pluronic R, Tetronic and Tetronic R (all manufactured by BASF SE, Germany), which are polyoxyethylene-polyoxypropylene block copolymers and commercially available as nonionic surfactants, specifically Poloxamer 124, Poloxamer 188, Poloxamer 237, Poloxamer 338, Poloxamer 407, Tetronic 904, Tetronic 908, Tetronic 1304, Tetronic 1107, Polysorbate 80 which is a polyoxyethylene sorbitan fatty acid ester, and the like.

As the cationic surfactant, any known cationic surfactant which is ophthalmologically acceptable can be appropriately employed. Examples of such cationic surfactants include tetraalkylammonium salts such as alkyltrimethylammonium chlorides such as octadecyltrimethylammonium chloride, dioleyldimethylammonium chloride, dodecyltrimethylammonium chloride, didecyldimethylammonium chloride, acylalkyltrimethylammonium chloride, tetradecyltrimethylammonium chloride and hexadecyltrimethylammonium chloride; octadecyltrimethylammonium bromide; dioleyldimethylammonium bromide; dodecyltrimethylammonium bromide; didecyldimethylammonium bromide; acylalkyltrimethylammonium bromide; tetradecyltrimethylammonium bromide; and hexadecyltrimethylammonium bromide. Further, trialkylbenzylammonium salts can also be similarly used. Examples thereof include octadecyldimethylbenzylammonium chloride, and octadecyldimethylbenzylammonium bromide. Furthermore, alkylhydroxyalkylimidazoline quaternary salts represented by hydroxyethylalkylimidazolinium chloride, alkylisoquinolinium salts represented by alkylisoquinolinium bromide, alkylpyridinium salts, amidoamines, and any other surfactant can be used, as long as it is ophthalmologically acceptable.

Generally, the above-described surfactant is used at a concentration of about 0.001 to about 10 w/v%, preferably about 0.005 to about 2 w/v% and more preferably about 0.01 to about 1 w/v%. When the concentration of the surfactant contained is too high, not only a further improvement in the cleaning effect is not expected, but also it may cause the irritation to the eyes. This is therefore undesirable. On the other hand, when the concentration is too low, sufficient cleaning effect may not be obtained. This is also undesirable.

In the liquid composition for a contact lens containing such a surfactant, the protein cleaning property and lipid cleaning property of the surfactant is advantageously improved due to the presence of the glycosyl trehalose contained in the liquid medium together with the surfactant, so that the protein stains and lipid stains on the contact lens treated with such a liquid composition for a contact lens can be extremely effectively removed. Accordingly, in the contact lens treated with the liquid composition for a contact lens according to the present invention, it can be advantageously inhibited or avoided to deteriorate the wearing feeling of the contact lens by the protein stains or lipid stains on the lens at the time of wearing it. Thus, the excellent wearing feeling of the contact lens can be advantageously enjoyed.

Further, in the liquid composition for a contact lens according to the present invention, in addition to the disinfectant and cleaning agent as described above, sodium chloride, a polyhydric alcohol, amino acids or the like can be appropriately contained as a tonicity agent for regulating the osmotic pressure, as needed.

Generally, the concentration of sodium chloride contained in the liquid medium is about 1.0 w/w% or less, and preferably about 0.2 w/w% or less. When the concentration of sodium chloride contained is too high, the wearing feeling of the contact lens may be undesirably deteriorated.

Further, as the polyhydric alcohol, it is preferable to use a dihydric alcohol such as an alkylene glycol or a derivative thereof, or a dihydric and trihydric alcohol such as glycerol or a derivative thereof. In particular, it is preferable to use a dihydric or trihydric alcohol having a main chain composed of an alkyl group having 2 to 8 carbon atoms, specifically, ethylene glycol, propylene glycol, butylene glycol, pentylene glycol, hexylene glycol or the like. Any one of, or any combination thereof may be used. Of these, glycerol or propylene glycol can advantageously increase the viscosity of the liquid composition for a contact lens, so that the contact lens treated with such a liquid composition for a contact lens can be advantageously decreased in the friction between the contact lens and the cornea, thereby exhibiting a characteristic that the wearing feeling of the contact lens can be more advantageously improved. Although the concentration of the polyhydric alcohol contained in the liquid composition is not particularly limited, the polyhydric alcohol is generally used at a concentration of about 0.01 to about 5 w/v%, preferably about 0.1 to about 3 w/v%, and more preferably about 0.25 to about 2.5 w/v%.

Further, examples of the amino acids include glycine, alanine, taurine, and ε-aminocaproic acid. Any one of, or any combination of the amino acids may be used. Of these, particularly, glycine is more preferably employed, because the glycine assists the disinfectant properties of the disinfectant and inhibits the deterioration of the compatibility of the contact lens. Although the concentration of the amino acid contained is not particularly limited, the amino acid is generally used at a concentration of about 0.01 to about 5 w/v%, and preferably at a concentration of about 0.25 to about 2 w/v%.

Generally, the osmotic pressure of the liquid composition for a contact lens is about 250 to about 400 mOsm/kg, which is substantially equivalent to the physiological osmotic pressure. In the liquid composition for a contact lens according to the present invention, the concentration of the above-described tonicity agent is appropriately set so as to obtain such an osmotic pressure.

In addition, in the liquid composition for a contact lens according to the present invention, various known additives which have conventionally been added to and contained in the liquid composition for a contact lens, such as a chelating agent, a pH adjustor, a buffer and a thickener, may be appropriately contained. Any conventionally known additive may be employed as the additive, as long as it has high safety to living organisms and has no influence to the shape and physical properties of the contact lens. The additive may be added and contained in the amount that does not impair the function and effect of the present invention.

The chelating agent is contained in order to prevent a metal ion such as calcium in the tear fluid from depositing on the contact lens. Examples of the chelating agent include ethylenediaminetetraacetic acid (EDTA), salts of ethylenediaminetetraacetic acid such as disodium ethylenediaminetetraacetate (EDTA·2Na) and trisodium ethylenediaminetetraacetate (EDTA·3Na), citric acid, gluconic acid, tartaric acid and salts (for example, sodium salts) of these acids. Further, although the concentration of the chelating agent in the liquid composition for a contact lens according to the present invention is not particularly limited, a concentration of about 0.01 to about 0.5 w/v% is generally employed. When the concentration of the chelating agent is too high, the above-described effect cannot be further increased, which undesirably results in disadvantage in cost. On the other hand, when the concentration is too low, the above-described effect may not be sufficiently exhibited. This is also undesirable.

Further, in the liquid composition for a contact lens according to the invention, when the pH value thereof is too high or too small, the eyes may suffer from irritation or may be damaged. It is therefore desirable that the pH value thereof is usually adjusted to about 4.0 to about 9.0, preferably to about 6.0 to about 8.0, and especially to about 7.0. For this reason, an appropriate pH adjustor or buffer may be appropriately added, as needed.

Examples of the pH adjustors which can be used for such pH adjustment include, but are not limited at all, to sodium hydroxide and hydrochloric acid.

The buffer for keeping the pH of the liquid composition for a contact lens effectively within the above-described range is not particularly limited. One may be appropriately selected from conventionally known various pH buffers and used. Specifically, it is advantageous to use acids such as citric acid, malic acid, lactic acid, ascorbic acid, maleic acid, gluconic acid, phosphoric acid, boric acid, oxycarboxylic acids, amino acids such as glycine and glutamic acid, and tris (hydroxymethyl)aminomethane (Tris), and salts thereof (for example, sodium salts); Good-Buffer containing taurine or a derivative thereof; hydroxyalkylamines such as bis(2-hydroxyethyl)iminotris(hydroxymethyl)methane (Bis-tris); and the like, because they are safe to the eye, and have little influence on the contact lens. In particular, it is more advantageous to use citric acid and a salt thereof, phosphoric acid, boric acid, Good-Buffer, hydroxyalkylamines and the like. Although, the concentration of the buffer contained in the liquid composition for a contact lens according to the present invention is not particularly limited, the concentration is generally from about 0.01 to about 2 w/w%. When the concentration of the buffer contained is too high, the osmotic pressure excessively increases and troubles such as irritation to the eye may be caused. This is undesirable in terms of safety. On the other hand, when the concentration of such a buffer contained is too low, the desired buffering capacity may not be sufficiently exhibited. This is therefore undesirable.

Further, examples of the thickeners which can be used in the present invention include synthetic organic polymer compounds such as polyvinyl alcohol, poly-N-vinylpyrrolidone, polyethylene glycol, polypropylene glycol and polyacrylamide; cellulose derivatives such as hydroxyethyl cellulose, hydroxypropyl cellulose and hydroxypropylmethyl cellulose; starch derivatives such as sodium carboxymethyl starch and hydroxyethyl starch; chondroitin sulfates; and hyaluronates. Of these, hydroxypropylmethyl cellulose is advantageously used, because it has been widely used as the compounding ingredient of the contact lens solution, and the effect of removing the lipid adhered to the contact lens is expected. The desired viscosity adjustment of the liquid composition for a contact lens can be advantageously performed by using such a thickener to more advantageously enhance moisture retention and wettability of the lens treated with the liquid composition for a contact lens containing the thickener, resulting in obtaining the more excellent wearing feeling. Although the concentration of the thickener contained in the liquid composition for a contact lens according to the present invention is not particularly limited, the concentration is generally from about 0.05 to about 5.0 w/w%, and preferably from about 0.1 to about 3.0 w/w%. When the concentration of the thickener contained is too high, the viscosity of the liquid composition for a contact lens finally obtained excessively increases, which may undesirably deteriorate handling properties, for example. On the other hand, when the concentration of the thickener contained is too low, a sufficient thickening effect may not be obtained. This is therefore undesirable.

Then, the above-described liquid composition for a contact lens according to the present invention not only can be prepared as a disinfecting solution, a cleaning solution, a storage solution, or a rinsing solution, for example, but also can be advantageously prepared as a multi-purpose solution which can perform all of disinfection, cleaning, storage, rinsing and the like by itself. When the liquid composition for a contact lens according to the present invention is used as the multi-purpose solution, the desired multi-purpose solution is obtained by appropriately adding the above-described

disinfectant, cleaning agent or the like in the above-described liquid medium, together with the glycosyl trehalose. The multi-purpose solution can concurrently exhibit the above-described various effects of the present invention, specifically, the moisture retention effect of the contact lens, the effect of inhibiting adsorption, the effect of reducing toxicity of the organic nitrogen-based disinfectant, and the cleaning property enhancing effect of the surfactant. Accordingly, various factors which deteriorate the wearing feeling of the contact lens are comprehensively resolved, thereby extremely advantageously improving the wearing feeling of the contact lens.

In the preparation of the above-described liquid composition for a contact lens, no special method is required. The liquid composition can be easily prepared by adding the above-described components to be contained in the liquid medium in moderate amounts in any order, in the same manner as in the preparation of the conventional contact lens liquid compositions.

The liquid composition for a contact lens according to the present invention can be applied to any kind of contact lenses such as non-water-absorbable or no-water-content, low-water-content, high-water-content soft contact lenses and hard contact lenses. Of these contact lenses, the liquid composition of the present invention can be advantageously applied to HEMA (hydroxyethyl methacrylate)-based, N-VP (N-vinyl-2-pyrrolidone)-based, and MAA (methacrylic acid)-based hydrated soft contact lenses and contact lenses made of silicone hydrogel.

EXAMPLES

To further clarify the present invention, some examples of the invention will be described. It is to be understood that the invention is not limited to the details of illustrated examples.

<Sample Solution 1>

Maltosyl trehalose was provided as a glycosyl trehalose, polyhexamethylene biguanide (PHMB, manufactured by Arch Chemicals Japan, Inc., Cosmocil CQ, hereinafter the same will apply) was provided as a disinfectant, further a polyoxyethylene-polyoxypropylene block copolymer (Poloxamer 407, manufactured by BASF SE, Germany, Pluronic, hereinafter the same will apply) was provided as a cleaning agent, and sodium chloride was provided as a tonicity agent. They were added to and dissolved in purified water so as to have a composition shown in the following Table 1, thereby preparing sample solution 1. Then, the following moisture retention test was performed for sample solution 1.

-Moisture Retention Test-

First, two types of commercially available hydrated soft contact lenses (commercial lens A: Focus 1 Week manufactured by CIBA VISION Corporation, commercial lens B: 2 Week Acuvue manufactured by Johnson & Johnson) were provided as contact lenses. Then, the two types of contact lenses were each immersed overnight in sample solution 1 prepared above. Thereafter, the contact lenses were each taken out of sample solution 1, and excess droplets were adsorbed by a nonwoven fabric (BEMCOT Clean Wipe-P, manufactured by ASAHI KASEI FIBERS CORPORATION). Then, each contact lens was fixed to a jig, and the initial weight ($W_1$) of the contact lens was measured in that state. Thereafter, 1.8 μL of ultrapure water was added dropwise onto the lens fixed to the jig, every 2 minutes, 15 times (for 28 minutes) (1.8 μL/2 min corresponds to about 90% of the tear fluid amount of a healthy subject), and after an elapse of 2 minutes from the final dropping, the weight ($W_2$) of the contact lens was measured again. The lens weight ratio (%) was calculated according to the following equation 1 by using the obtained results. The test was performed in a chamber with constant temperature and humidity, which was controlled to 25°C and 40% (RH) (relative humidity).

$$\text{Lens weight ratio (\%)} = W_2\ (g) / W_1\ (g) \times 100\ (\%) \cdots \text{(equation 1)}$$

<Sample Solutions 2 and 3 and Comparative Solution 1>

Sample solution 2 was prepared in the same manner as in sample solution 1 with the exception that maltosyl trehalose was used as the glycosyl trehalose at a ratio shown in the following Table 1. Further, sample solution 3 was prepared in the same manner as sample solution 1 with the exceptions that maltosyl trehalose, glucosyl trehalose and maltotriosyl trehalose were used as the glycosyl trehaloses at a ratio shown in the following Table 1, and that a starch hydrolyzate derivative was further contained at a ratio shown in the following Table 1. In addition, comparative solution 1 was prepared in the same manner as in sample solution 1 with the exception that no glycosyl trehalose was contained. Then, for these sample solutions 2 and 3 and comparative solution 1 prepared, the above-described moisture retention test was performed in the same manner as in sample solution 1, and the lens weight ratio was calculated for each solution.

The lens weight ratio in comparative solution 1 obtained by the test was taken as a water retention amount of 100%. Then, the lens weight ratio in each of sample solutions 1 to 3 was converted to the water retention amount. The results thereof are shown together in the following Table 1.

[Table 1]

| | | | Sample Solution | | | Comparative Solution |
|---|---|---|---|---|---|---|
| | | | 1 | 2 | 3 | 1 |
| Composition | PHMB (w/v%) | | 0.0001 | 0.0001 | 0.0001 | 0.0001 |
| | Poloxamer 407 (w/v%) | | 0.05 | 0.05 | 0.05 | 0.05 |
| | Glycosyl trehalose (w/w%) | Maltosyl trehalose | 0.40 | 0.80 | 0.40 | - |
| | | Glucosyl trehalose + maltotriosyl trehalose | - | - | 0.10 | - |
| | Starch hydrolyzate derivative (w/w%) | Maltotriitol + martotetraitol | - | - | 0.24 | - |
| | | Sorbitol + maltitol + maltopentaitol | - | - | 0.04 | - |
| | NaCl (wlw%) | | 0.90 | 0.90 | 0.90 | 0.90 |
| Evaluation | Water Retention Amount | Commercial lens A | 104% | 109% | 104% | 100% |
| | | Commercial lens B | 105% | 111% | 106% | 100% |

As apparent from the results shown in Table 1, the water retention amount of either of the two types of contact lenses immersed in sample solutions 1 to 3 is larger than that of the contact lenses immersed in comparative solution 1. It was observed that the solutions for contact lenses containing glycosyl trehalose according to the present invention (sample solutions 1 to 3) have higher moisture retention effect than the solution for a contact lens containing no glycosyl trehalose (comparative solution 1).

<Sample Solution 4>

Maltosyl trehalose was provided as a glycosyl trehalose, polyhexamethylene biguanide (PHMB) was provided as an organic nitrogen-based disinfectant, and propylene glycol was provided as a tonicity agent. They were added to and dissolved in purified water so as to have a composition shown in the following Table 2, thereby preparing sample solution 4. Then, the following disinfectant adsorption test was performed for sample solution 4.

-Disinfectant Adsorption Test-

Initially, a commercially available contact lens (PremiO, manufactured by Menicon Co., Ltd.) composed of a silicone hydrogel was provided as a contact lens, and the contact lens was immersed overnight in sample solution 4 prepared above. Then, the contact lens was taken out of sample solution 4, and it was immersed in 7 mL of a reaction solution (an aqueous solution containing reactants: 0.02 w/v% of eosin Y (sodium tetrabromofluorescein) and 0.56 w/v% of sodium acetate) for about 30 seconds, thereby staining PHMB adsorbed onto the contact lens. Thereafter, the contact lens was taken out of the reaction solution and immersed in 7 mL of ethanol for 30 seconds to remove the excess reactant (eosin Y) adhered to the contact lens. Subsequently, the contact lens was immersed in saline (Japanese Pharmacopoeia) to remove ethanol, and the contact lens was impregnated with saline. Then, the contact lens was taken out of the saline, and UV measurement (wavelength region: 450 to 600 nm, slit width: 12 nm, measurement mode: ABS) was made by using a commercially available UV instrument to obtain an UV absorption spectrum of the contact lens treated with sample solution 4.

<Sample Solutions 5 to 11 and Comparative Solution 2>

Sample solutions 5 to 9 were prepared in the same manner as in sample solution 4 with the exception that maltosyl trehalose was used as the glycosyl trehalose at a ratio shown in the following Table 2. Sample solution 10 was prepared in the same manner as in sample solution 4 with the exceptions that glycine was further added as the tonicity

agent at a ratio shown in the following Table 2 to the composition of sample solution 9, and that propylene glycol was used at a ratio shown in the following Table 2. Further, sample solution 11 was prepared in the same manner as in sample solution 4 with the exceptions that maltosyl trehalose, glucosyl trehalose and maltotriosyl trehalose were used as the glycosyl trehaloses at ratio shown in the following Table 2, and that a starch hydrolyzate derivative was further contained at a ratio shown in the following Table 2. Furthermore, comparative solution 2 was prepared in the same manner as in sample solution 4 with the exception that no glycosyl trehalose was contained. Then, for these sample solutions 5 to 11 and comparative solution 2, the above-described disinfectant adsorption test was performed in the same manner as in sample solution 4, and further, the UV measurement was similarly made to obtain UV absorption spectra of the contact lenses treated with sample solutions 5 to 11 and comparative solution 2.

In addition, in place of the contact lens immersed in sample solution 4, as a blank, a contact lens (new contact lens), which is the same contact lens as provided above was immersed in 7 mL of the above-described reaction solution as it is. Thereafter, the above-described disinfectant adsorption test was performed in the same manner as in sample solution 4, and an UV absorption spectrum of the contact lens was obtained.

Then, the absorbance at the maximum absorption wavelength of a spectrum obtained by subtracting the spectrum of the blank contact lens from the spectrum of the contact lens immersed in comparative solution 2 obtained above was taken as a PHMB adsorption rate of 100%. Then, the PHMB adsorption rate of each of sample solutions 4 to 11 was converted. The results thereof are shown together in the following Table 2.

[Table 2]

| | | | Sample Solution | | | | | | | | Comparative Solution |
|---|---|---|---|---|---|---|---|---|---|---|---|
| | | | 4 | 5 | 6 | 7 | 8 | 9 | 10 | 11 | 2 |
| Composition | PHMB (w/v%) | | 0.0001 | 0.0001 | 0.0001 | 0.0001 | 0.0001 | 0.0001 | 0.0001 | 0.0001 | 0.0001 |
| | Glycosyl trehalose (w/w%) | Maltosyl trehalose | 0.01 | 0.02 | 0.04 | 0.10 | 0.20 | 0.40 | 0.40 | 0.40 | - |
| | | Glucosyl trehalose + maltotriosyl trehalose | - | - | - | - | - | - | - | 0.10 | - |
| | Starch hydrolyzate derivative (w/w%) | Maltotriitol + martotetraitol | - | - | - | - | - | - | - | 0.24 | - |
| | | Sorbitol + maltitol + maltopentaitol | - | - | - | - | - | - | - | 0.04 | - |
| | Propylene glycol (w/v%) | | 2.00 | 2.00 | 2.00 | 2.00 | 2.00 | 2.00 | 1.50 | 2.00 | 2.00 |
| | Glycine (w/v%) | | - | - | - | - | - | - | 0.50 | - | - |
| Evaluation | PHMB Adsorption Rate | | 92% | 88% | 83% | 80% | 78% | 65% | 63% | 63% | 100% |

As apparent from the results shown in Table 2, the PHMB adsorption rate of sample solutions 4 to 11 is lower than that of comparative solution 2. It was observed that the solutions for contact lenses containing glycosyl trehalose according to the present invention (sample solutions 4 to 11) were effectively inhibited in adsorption of the organic nitrogen-based disinfectant, compared to the solution for a contact lens containing no glycosyl trehalose (comparative solution 2).

<Sample Solution 12>

Maltosyl trehalose was provided as a glycosyl trehalose, and polyhexamethylene biguanide (PHMB) was provided as an organic nitrogen-based disinfectant. Then, they are added to and dissolved in a 5 vol% bovine fetal serum-added MEM liquid at a ratio shown in the following Table 3, thereby preparing sample solution 12. Then, for that sample solution 12 prepared, the following cytotoxicity test was performed.

-Cytotoxicity Test-

Initially, a fresh medium (5 vol% bovine fetal serum-added MEM liquid) was poured into a multiplate for cell culture, and about 50 V79 cells (Chinese hamster lung-derived fibroblasts) were disseminated thereon. Then, the multiplate was accommodated in an incubator maintained at 37°C, and cultured for 24 hours. Thereafter, only the medium (5 vol% bovine fetal serum-added MEM liquid) was removed, while the cells obtained by this culture were left on the multiplate. Then, sample solution 12 prepared above was added onto the multiplate, followed by culture for 1 week in the incubator maintained at 37°C. After the culture, sample solution 12 was stained to measure the number of colonies.

<Sample Solutions 13 to 15 and Comparative Solutions 3 to 5>

Sample solution 13 was prepared in the same manner as in sample solution 12 with the exception that benzalkonium chloride (manufactured by Sigma Corporation) was used as the organic nitrogen-based disinfectant in place of polyhexamethylene biguanide (PHMB). Further, sample solution 14 was prepared in the same manner as in sample solution 12 with the exception that maltosyl trehalose and PHMB were used at a ratio shown in the following Table 3. Furthermore, sample solution 15 was prepared in the same manner as in sample solution 12 with the exceptions that maltosyl trehalose, glucosyl trehalose and maltotriosyl trehalose were used as the glycosyl trehaloses at a ratio shown in the following Table 3, and that a starch hydrolyzate derivative was further contained at a ratio shown in the following Table 3. In addition, comparative solutions 3 to 5 were prepared in the same manner as in sample solutions 12 to 14 with the exception that no glycosyl trehalose was contained. Then, for sample solutions 12 to 15 and comparative solutions 3 to 5 prepared as described above, the above-described cytotoxicity test was performed in the same manner as in sample solution 12 to measure the number of colonies after the culture for 1 week.

Further, as a blank, a fresh medium (5 vol% bovine fetal serum-added MEM liquid) was poured into a multiplate for cell culture, and about 50 V79 cells (Chinese hamster lung-derived fibroblasts) were disseminated thereon, followed by culture for 1 week in an incubator maintained at 37°C. Then, the medium after such culture was stained to measure the number of colonies.

Then, colony formation rates were each calculated from the number of colonies formed in sample solutions 12 to 15, comparative solutions 3 to 5 and the blank (fresh medium), according to the following equation 2. The results thereof obtained are shown together in the following Table 3.

Colony formation rate = (average number of colonies formed in the sample solution or comparative solution)/(average number of colonies formed in the blank) × 100(%) ··· (equation 2)

[Table 3]

| | | | Sample Solution | | | | Comparative Solution | | |
|---|---|---|---|---|---|---|---|---|---|
| | | | 12 | 13 | 14 | 15 | 3 | 4 | 5 |
| Composition | PHMB (w/v%) | | 0.00025 | - | 0.0005 | 0.0005 | 0.00025 | - | 0.0005 |
| | Benzalkonium chloride (w/v%) | | - | 0.00025 | - | - | - | 0.00025 | - |
| | Glycosyl trehalose (w/w%) | Maltosyl trehalose | 0.04 | 0.04 | 0.10 | 0.10 | - | - | - |
| | | Glucosyl trehalose + maltotriosyl trehalose | - | - | - | 0.025 | - | - | - |
| | Starch hydrolyzate derivative (w/w%) | Maltotriitol + martotetraitol | - | - | - | 0.06 | - | - | - |
| | | Sorbitol + maltitol + maltopentaitol | - | - | - | 0.01 | - | - | - |
| Evaluation | Rate of Colony Formation | | 78.10% | 85.40% | 92.60% | 95.40% | 66.40% | 70.80% | 1.70% |

As apparent from the results shown in Table 3, the colony formation rate in sample solutions 12 to 15 is higher than the colony formation rate in comparative solutions 3 to 5. It was observed that the solutions for contact lenses containing glycosyl trehalose according to the present invention (sample solutions 12 to 15) were effectively reduced in toxicity (cytotoxicity) of the organic nitrogen-based disinfectant, compared to the solutions for contact lenses containing no glycosyl trehalose (comparative solutions 3 to 5).

<Sample Solution 16>

Maltosyl trehalose was provided as a glycosyl trehalose, a polyoxyethylene-polyoxypropylene block copolymer (Poloxamer 407) was provided as a surfactant, PHMB was provided as a disinfectant, and further propylene glycol was provided as a tonicity agent. They were added to and dissolved in purified water so as to have a composition shown in the following Table 4, thereby preparing sample solution 16. Then, the following protein cleaning test was performed for sample solution 16.

-Protein Cleaning Test-

Initially, hydrated soft contact lenses (commercial lens B) were prepared as contact lenses. Then, 6 pieces of the contact lenses were placed in a test tube containing water, and crushed with a crusher in the test tube to prepare lens fragments. The contact lenses were crushed for 1 minute. Then, the resulting lens fragments were transferred into a syringe with filter, and repeatedly washed with purified water in the syringe. Thereafter, 2 ml of an artificially contaminated liquid (an aqueous solution containing 0.12% of egg white-derived lysozyme and 0.011% of calcium chloride) was aspirated into the syringe, and the lens fragments and the artificially contaminated liquid in the syringe were stirred with a vortex mixer for 2 minutes, thereby adhering protein stains (lysozyme) to the lens fragments. Subsequently, the artificially contaminated liquid was discharged, and then, 2 ml of sample solution 16 prepared above was aspirated into the syringe. The syringe was put in the vortex mixer for 2 minutes to wash the lens fragments. Then, UV absorption measurement was made by using a commercially available UV instrument to determine the absorbance at 281 nm.

<Sample Solutions 17 to 20 and Comparative Solution 6>

Sample solutions 17 and 18 were prepared in the same manner as in sample solution 16 with the exception that maltosyl trehalose was used as the glycosyl trehalose at a ratio shown in the following Table 4. Further, sample solution 19 was prepared in the same manner as in sample solution 16 with the exceptions that glycine was further contained as the tonicity agent at a ratio shown in the following Table 4, and that maltosyl trehalose and polypropylene glycol were used at ratios shown in the following Table 4. Furthermore, sample solution 20 was prepared in the same manner as in sample solution 16 with the exceptions that maltosyl trehalose, glucosyl trehalose and maltotriosyl trehalose were used as the glycosyl trehaloses at ratios shown in the following Table 4, and that a starch hydrolyzate derivative was contained at a ratio shown in the following Table 4. In addition, comparative solution 6 was prepared in the same manner as in sample solution 16 with the exception that no glycosyl trehalose was contained. Then, for sample solutions 17 to 20 and comparative solution 6, the above-described protein cleaning test was performed in the same manner as in sample solution 16, and the UV absorption measurement was similarly made to determine the absorbance at 281 nm.
Further, as a blank, the UV absorption measurement of the above-described artificially contaminated liquid was made to determine the absorbance at 281 nm.
Then, from the absorbance (A) of each of sample solutions 16 to 20 and comparative solution 6 obtained above and the absorbance (B) of the blank, the amount of lysozyme removed was calculated according to the following equation 3:

$$\text{Amount of lysozyme removed } (\mu g) = 2400\ (\mu g)^{*} \times A/B \cdots \text{(equation 3)}$$

*: The amount of lysozyme contained in the above-described 2-mL artificially contaminated liquid
Then, the obtained amount of lysozyme removed from comparative solution 6 was taken as a protein cleaning property of 100%. Then, the amount of lysozyme removed from each of sample solutions 16 to 20 was converted to the protein cleaning property. The results thereof are shown together in the following Table 4.

[Table 4]

| | | | Sample Solution | | | | | Comparative Solution |
|---|---|---|---|---|---|---|---|---|
| | | | 16 | 17 | 18 | 19 | 20 | 6 |
| Composition | PHMB (w/v%) | | 0.0001 | 0.0001 | 0.0001 | 0.0001 | 0.0001 | 0.0001 |
| | Poloxamer 407 (w/v%) | | 0.05 | 0.05 | 0.05 | 0.50 | 0.50 | 0.05 |
| | Glycosyl trehalose (w/w%) | Maltosyl trehalose | 0.20 | 0.30 | 0.40 | 0.40 | 0.40 | - |
| | | Glucosyl trehalose + maltotriosyl trehalose | - | - | - | - | 0.10 | - |
| | Starch hydrolyzate derivative (w/w%) | Maltotriitol + martotetraitol | - | - | - | - | 0.24 | - |
| | | Sorbitol + maltitol + maltopentaitol | - | - | - | - | 0.04 | - |
| | Propylene Glycol (w/v%) | | 2.00 | 2.00 | 2.00 | 1.50 | 2.00 | 2.00 |
| | Glycine (w/v%) | | - | - | - | 0.50 | - | - |
| Evaluation | Protein Cleaning Property | | 141 % | 135% | 140% | 144% | 143% | 100% |

As apparent from the results shown in Table 4, the protein cleaning property of sample solutions 16 to 20 is higher than that of comparative solution 6. It was observed that the solutions for contact lenses containing glycosyl trehalose according to the present invention (sample solutions 16 to 20) were enhanced in protein cleaning property, compared to the solution for a contact lens containing no glycosyl trehalose (comparative solution 6).

<Sample Solution 21>

Maltosyl trehalose was provided as a glycosyl trehalose, a polyoxyethylene-polyoxypropylene block copolymer (Poloxamer 407) was provided as a surfactant, PHMB was provided as a disinfectant, and propylene glycol was provided as a tonicity agent. Then, they were added to and dissolved in purified water so as to have a composition shown in the following Table 5, thereby preparing sample solution 21. Then, the following lipid cleaning test was performed for sample solution 21.

-Lipid Cleaning Test-

Initially, 30 mL of sample solution 21 prepared above was weighed and put in a screw cap bottle made of glass. Then, 3 pieces of about 0.8 g colored pseudo eye mucus pellets (99% by weight of lipid triglyceride + 1% by weight of Sudan I (dye), 21 mm × 21 mm × 4 mm) were placed in the solution in this screw cap bottle, and a cylinder portion of the screw cap bottle was immersed in a constant-temperature shaker set at 25°C. Then, the screw cap bottle was shaken in that state for 17 hours, thereby dissolving the colored pseudo eye mucus pellets. After the shake, sample solution 21 was taken out of the screw cap bottle. For sample solution 21, UV absorption measurement was made by using a commercially available UV instrument to determine the absorbance at 485 nm. The higher absorbance shows that the larger amount of the colored pseudo eye mucus pellets was dissolved, which means high cleaning effect.

<Sample Solutions 22 to 28 and Comparative Solution 7>

Sample solutions 22 to 27 were each prepared in the same manner as in sample solution 21 with the exception that maltosyl trehalose was used as the glycosyl trehalose at a ratio shown in the following Table 5. Sample solution 28 was prepared in the same manner as in sample solution 21 with the exceptions that maltosyl trehalose, glucosyl trehalose and maltotriosyl trehalose were used as the glycosyl trehaloses at a ratio shown in the following Table 5, and that a starch hydrolyzate derivative was contained at a ratio shown in the following Table 5. In addition, comparative solution

7 was prepared in the same manner as in sample solution 21 with the exception that no glycosyl trehalose was contained. Then, for sample solutions 22 to 28 and comparative solution 7, the above-described lipid cleaning test was performed in the same manner as in sample solution 21, and the UV absorption measurement was similarly made to determine the absorbance at 485 nm.

The obtained absorbance of comparative solution 7 was taken as a lipid cleaning property of 100%, and the obtained absorbance in each of sample solutions 21 to 28 was converted to the lipid cleaning property. The results thereof are shown together in the following Table 5.

[Table 5]

| [Table 5] | | | Sample Solution | | | | | | | | Comparative Solution |
|---|---|---|---|---|---|---|---|---|---|---|---|
| | | | 21 | 22 | 23 | 24 | 25 | 26 | 27 | 28 | 7 |
| Composition | PHMB (w/v%) | | 0.0001 | 0.0001 | 0.0001 | 0.0001 | 0.0001 | 0.0001 | 0.0001 | 0.0001 | 0.0001 |
| | Poloxamer 407 (w/v%) | | 0.05 | 0.05 | 0.05 | 0.05 | 0.05 | 0.05 | 0.05 | 0.05 | 0.05 |
| | Glycosyl trehalose (w/w%) | Maltosyl trehalose | 0.01 | 0.02 | 0.04 | 0.10 | 0.20 | 0.30 | 0.40 | 0.40 | - |
| | | Glucosyl trehalose + maltotriosyl trehalose | - | - | - | - | - | - | - | 0.10 | - |
| | Starch hydrolyzate derivative (w/w%) | Maltotriitol + martotetraitol | - | - | - | - | - | - | - | 0.24 | - |
| | | Sorbitol + maltitol + maltopentaitol | - | - | - | - | - | - | - | 0.04 | - |
| | Propylene glycol (w/v%) | | 2.00 | 2.00 | 2.00 | 2.00 | 2.00 | 2.00 | 2.00 | 2.00 | 2.00 |
| Evaluation | Lipid Cleaning Property | | 107% | 112% | 116% | 118% | 124% | 127% | 132% | 131% | 100% |

As apparent from the results shown in Table 5, the lipid cleaning property of sample solutions 21 to 28 is higher than that of comparative solution 7. It was observed that the solutions for contact lenses containing glycosyl trehalose according to the present invention (sample solutions 21 to 28) were enhanced in lipid cleaning property, compared to the solution for a contact lens containing no glycosyl trehalose (comparative solution 7).

## Claims

**1.** A liquid composition for a contact lens comprising a glycosyl trehalose in a liquid medium wherein the glycosyl trehalose is an oligosaccharide that is composed of three or more monosaccharides in which a glucose unit having a polymerization degree of 1 to 10 is bonded to trehalose, and the glycosyl trehalose is contained in the liquid medium at a concentration of 0.01 to 5 w/w%.

**2.** The liquid composition for a contact lens according to claim 1, further comprising an organic nitrogen-based disinfectant.

**3.** The liquid composition for a contact lens according to claim 2, wherein the organic nitrogen-based disinfectant comprises at least one component selected from the group consisting of a quaternary ammonium compound, a polymer of the quaternary ammonium compound, a biguanide compound, and a polymer of the biguanide compound.

**4.** The liquid composition for a contact lens according to claim 2 or 3, wherein the organic nitrogen-based disinfectant is contained at a concentration of 0.00001 to 0.1 w/v%.

**5.** The liquid composition for a contact lens according to any one of claims 1 to 4, further comprising a surfactant.

**6.** The liquid composition for a contact lens according to claim 5, wherein the surfactant comprises at least one component selected from the group consisting of a nonionic surfactant and a cationic surfactant.

**7.** The liquid composition for a contact lens according to claim 5 or 6, wherein the surfactant is contained at a concentration of 0.001 to 10 w/v%.

**8.** The liquid composition for a contact lens according to any one of claims 1 to 7, further comprising a polyhydric alcohol.

**9.** The liquid composition for a contact lens according to claim 8, wherein the polyhydric alcohol is at least one of glycerol and propylene glycol.

**10.** The liquid composition for a contact lens according to claim 8 or 9, wherein the polyhydric alcohol is contained at a concentration of 0.01 to 5 w/v%.

**11.** The liquid composition for a contact lens according to any one of claims 1 to 10, further comprising amino acids.

**12.** The liquid composition for a contact lens according to claim 11, wherein the amino acids is contained at a concentration of 0.01 to 5 w/v%.

**13.** Use of the liquid composition for a contact lens according to any one of claims 1 to 12 as one of a disinfecting solution, cleaning solution, storage solution, and rinsing solution for a contact lens.

## Patentansprüche

**1.** Flüssigkeitszusammensetzung für eine Kontaktlinse, die eine Glykosyltrehalose in einem flüssigen Medium umfasst, wobei die Glykosyltrehalose ein Oligosaccharid ist, das aus drei oder mehr Monosacchariden besteht, worin eine Glucoseeinheit mit einem Polymerisationsgrad von 1 bis 10 an Trehalose gebunden ist, und die Glykosyltrehalose in dem flüssigen Medium in einer Konzentration von 0,01 bis 5 Gew.-% enthalten ist.

**2.** Flüssigkeitszusammensetzung für eine Kontaktlinse nach Anspruch 1, die weiters ein Desinfektionsmittel auf Basis eines organischen Stickstoffs umfasst.

3. Flüssigkeitszusammensetzung für eine Kontaktlinse nach Anspruch 2, wobei das Desinfektionsmittel auf Basis eines organischen Stickstoffs zumindest eine Komponente umfasst, die aus der aus einer quaternären Ammoniumverbindung, einem Polymer der quaternären Ammoniumverbindung, einer Biguanidverbindung und einem Polymer der Biguanidverbindung bestehenden Gruppe ausgewählt ist.

4. Flüssigkeitszusammensetzung für eine Kontaktlinse nach Anspruch 2 oder 3, wobei das Desinfektionsmittel auf Basis eines organischen Stickstoffs in einer Konzentration von 0,00001 bis 0,1 % (Gew./Vol.) enthalten ist.

5. Flüssigkeitszusammensetzung für eine Kontaktlinse nach einem der Ansprüche 1 bis 4, die weiters ein Tensid umfasst.

6. Flüssigkeitszusammensetzung für eine Kontaktlinse nach Anspruch 5, wobei das Tensid zumindest eine Komponente umfasst, die aus der aus einem nichtionischen Tensid und einem kationischen Tensid bestehenden Gruppe ausgewählt ist.

7. Flüssigkeitszusammensetzung für eine Kontaktlinse nach Anspruch 5 oder 6, wobei das Tensid in einer Konzentration von 0,001 bis 10 % (Gew./Vol.) enthalten ist.

8. Flüssigkeitszusammensetzung für eine Kontaktlinse nach einem der Ansprüche 1 bis 7, die weiters einen mehrwertigen Alkohol umfasst.

9. Flüssigkeitszusammensetzung für eine Kontaktlinse nach Anspruch 8, wobei der mehrwertige Alkohol zumindest einer aus Glycerin und Propylenglykol ist.

10. Flüssigkeitszusammensetzung für eine Kontaktlinse nach Anspruch 8 oder 9, wobei der mehrwertige Alkohol in einer Konzentration von 0,01 bis 5 % (Gew./Vol.) enthalten ist.

11. Flüssigkeitszusammensetzung für eine Kontaktlinse nach einem der Ansprüche 1 bis 10, die weiters Aminosäuren enthält.

12. Flüssigkeitszusammensetzung für eine Kontaktlinse nach Anspruch 11, wobei die Aminosäuren in einer Konzentration von 0,01 bis 5 % (Gew./Vol.) enthalten sind.

13. Verwendung der Flüssigkeitszusammensetzung für eine Kontaktlinse nach einem der Ansprüche 1 bis 12 als eines aus einer Desinfektionslösung, Reinigungslösung, Lagerlösung und Spüllösung für eine Kontaktlinse.

## Revendications

1. Composition liquide pour une lentille de contact comprenant un glycosyl-tréhalose dans un milieu liquide, le glycosyl-tréhalose étant un oligosaccharide qui est composé de trois monosaccharides ou plus dans lesquels un motif glucose ayant un degré de polymérisation de 1 à 10 est lié au tréhalose, et le glycosyl-tréhalose est contenu dans le milieu liquide à une concentration de 0,01 à 5 % m/m.

2. Composition liquide pour une lentille de contact selon la revendication 1, comprenant en outre un désinfectant à base d'azote organique.

3. Composition liquide pour une lentille de contact selon la revendication 2, le désinfectant à base d'azote organique comprenant au moins un composant choisi dans le groupe constitué d'un composé ammonium quaternaire, un polymère du composé d'ammonium quaternaire, un composé biguanide, et un polymère du composé biguanide.

4. Composition liquide pour une lentille de contact selon la revendication 2 ou 3, le désinfectant à base d'azote organique étant contenu à une concentration de 0,00001 à 0,1 % m/v.

5. Composition liquide pour une lentille de contact selon l'une quelconque des revendications 1 à 4, comprenant en outre un tensioactif.

6. Composition liquide pour une lentille de contact selon la revendication 5, le tensioactif comprenant au moins un

composant choisi dans le groupe constitué d'un tensioactif non ionique et un tensioactif cationique.

**7.** Composition liquide pour une lentille de contact selon la revendication 5 ou 6, le tensioactif étant contenu à une concentration de 0,001 à 10 % m/v.

**8.** Composition liquide pour une lentille de contact selon l'une quelconque des revendications 1 à 7, comprenant en outre un polyol.

**9.** Composition liquide pour une lentille de contact selon la revendication 8, le polyol étant au moins l'un du glycérol et du propylèneglycol.

**10.** Composition liquide pour une lentille de contact selon la revendication 8 ou 9, le polyol étant contenu à une concentration de 0,01 à 5 % m/v.

**11.** Composition liquide pour une lentille de contact selon l'une quelconque des revendications 1 à 10, comprenant en outre des acides aminés.

**12.** Composition liquide pour une lentille de contact selon la revendication 11, les acides aminés étant contenus à une concentration de 0,01 à 5 % m/v.

**13.** Utilisation de la composition liquide pour une lentille de contact selon l'une quelconque des revendications 1 à 12 comme étant l'une d'une solution désinfectante, une solution nettoyante, une solution de stockage, et une solution de rinçage pour une lentille de contact.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004512904 T
- JP 2000347146 A
- JP 2005281319 A
- JP 8152585 A
- JP 2550036 B
- JP 4231054 A
- JP 8512145 A
- JP 11249087 A